# EUROPÄISCHE PATENTSCHRIFT

(11) **EP 1 025 657 B1**
(45) Veröffentlichungstag und Bekanntmachung des Hinweises auf die Patenterteilung: **06.03.2002**
(21) Anmeldenummer: 98942640.8
(22) Anmeldetag: 27.07.1998
(51) Int. Cl.: H04B 7/185

(54) **SYSTEM ZUR INFORMATIONSÜBERTRAGUNG BASIEREND AUF KOMBINIERTER KURZWELLE- UND SATELLITENÜBERTRAGUNG**
DATA TRANSMISSION SYSTEM BASED ON COMBINED SHORTWAVE-SATELLITE TRANSMISSION
SYSTEME DE TRANSMISSION D'INFORMATIONS FONDE SUR LA TRANSMISSION COMBINEE ONDES COURTES-SATELLITE

(30) Priorität: 15.10.1997 DE 19745573
(43) Veröffentlichungstag der Anmeldung: 09.08.2000
(73) Patentinhaber: Rohde & Schwarz GmbH & Co. KG, D-81671 München (DE)
(72) Erfinder: KNEIDEL, Thomas, D-82256 Fürstenfeldbruck (DE)
(74) Vertreter: Graf, Walter, Dipl.-Ing.
(86) Internationale Anmeldenummer: EP9804700
(87) Internationale Veröffentlichungsnummer: WO9919996

(56) Entgegenhaltungen:
- SPRACKLEN: "Digital Communications Protocols in the Satellite Environment" IEEE COLLOQUIUM ON INTEGRATION OF SATELLITE AND TERRESTRIAL OCS, 7. April 1997, Seiten 4/1-4/7, XP002081898
- L.GOLDBERG: "The Internet in Space: problems and solutions" COMPUTER, Bd. 30, 1. Februar 1997, Seiten 15-16, XP002081899
- J.FARSEROTU: "TCP/IP over Low Rate ATM-SATCOM Links" IEEE CONFERENCE PROCEEDINGS, MILITARY COMMUNICATION, 1996, Bd. 1, 21. - 24. Oktober 1996, Seiten 162-167, XP002081900
- J.GAVILAN ET AL.: "Usage of VSAT for TCP/IP based LAN Interconnection." INFOCOM'95.FOURTEENTH ANNUAL JOINT CONFERENCE OF THE IEEE COMPUTER AND COMMUNICATIONS SOCIETIES.'BRINGING INFORMATION TO PEOPLE', 2. - 6. April 1995, Seiten 861-866, XP002081901
- J.FARSEROTU: "Test and Analysis of Low Data Rate ATM over Satcom" MILITARY COMMUNICATIONS CONFERENCE, 1995. MILCOM '95, CONFERENCE RECORD, IEEE, Bd. 1, Seiten 224-230, XP002081902

## Beschreibung

Die Erfindung betrifft ein System zur Übertragung von Informationen über einen breitbandigen Satellitenübertragungskanal im Broadcast-Betrieb an einen Benutzer.

Ein System dieser Art ist bekannt (Zeitschrift Connect, 7/97, S. 74). Damit können Informationen, beispielsweise aus dem Internet, sehr schnell mit großer Übertragungsrate zu Benutzern übertragen werden. Die Übertragung erfolgt über Fernsehsatelliten (Transponder). Die Abfrage der gewünschten Informationen durch den Benutzer erfolgt wie üblich über eine Telefonleitung.

Manche Benutzer können zur Abfrage keine Telefonleitungen benutzen, beispielsweise dann nicht, wenn der Benutzer auf einem Schiff sitzt oder ein Flugzeug benutzt und außerdem so weit von Telefonnetzen entfernt ist, daß auch keine UHF- oder VHF-Kommunikationssy steme wie Mobilfunkeinrichtungen einsetzbar sind.

Es ist Aufgabe der Erfindung, auch solchen Benutzem, die keine Möglichkeit für eine solche beispielsweise drahtgebundene Verbindung mit dem Internet haben, und denen nur die eingeschränkten Möglichkeiten der Kurzwellenkommunikation zur Verfügung stehen, den Empfang von Internet-Informationen über einen Satellitenübertragungskanal im Broadcast-Betrieb zu bieten.

Diese Aufgabe wird erfindungsgemäß dadurch gelöst, daß die Benutzer mit dem Internet über eine Kurzwellenfunkstrecke verbunden sind, auf der die Daten nach dem bekannten TCP/IP-Protokoll übertragen werden.

Die Erfindung macht sich die Erkenntnis zunutze, daß solche Kurzwellenfunkstrecken im Bereich von beispielsweise 1,5 bis 30 MHz über weite Entfernungen auf dem ganzen Globus einsetzbar sind. Solche Kurzwellenverbindungen sind im Gegensatz zu drahtgebundenen Telefonleitungen oder im VHF/UHF-Frequenzbereich arbeitenden Mobilfunkverbindungen häufig instabil, bieten sehr geringe Übertragungsraten (<3kbit/s) und werden meist im Simplex-Mode betrieben. Die Verwendung des für die Datenübertragung in den weltweiten Kommunikationsnetzen, wie dem Internet, im Einsatz befindliche international genormte TCP/IP Protokoll, das im Vollduplex-Mode arbeitet und wie es beispielsweise beschrieben ist in dem Buch "Intemetworking With TCP/IP" von Douglas E. Comer, Prentice Hall, Englewood Cliffs, New Jersey 07632, war dem Übertragungsmedium Kurzwelle bislang vorenthalten. Für den erfindungsgemäßen Zweck ist dieses TCP/IP-Protokoll so abgewandelt und angepaßt, daß es auch für die im Kurzwellenbereich übliche zeitlich aufeinanderfolgende abwechselnde Hin- und Rückverbindung einsetzbar ist. Eine solche nach dem TCP/IP-Protokoll datenübertragende Kurzwellen-Verbindung ist damit auch zur Abfrage von Informationen im Internet geeignet. Für einen Internet-Benutzer auf einem Schiff, der eine Kurzwellen-Sender/Empfänger-Einrichtung mit diesen Eigenschaften besitzt, kann also jederzeit beispielsweise beim Internet-Provider einen bestimmten Internet-Inhalt über seine Kurzwellenverbindung abfragen und dieser wird ihn dann über einen breitbandigen Satellitenübertragungskanal unmittelbar übertragen. Obwohl solche Kurzwellenfunkstrecken relativ schmalbandig sind, wird hierdurch erstmals die Möglichkeit geschaffen, daß auch Benutzer, die keine Möglichkeit für eine Drahtverbindung zum Internet-Anbieter besitzen, von der Möglichkeit einer Internet-Informationsübertragung mit großer Übertragungsrate über einen Satellitenübertragungskanal Gebrauch zu machen.

Die Erfindung wird im folgenden anhand einer schematischen Zeichnung an einem Ausführungsbeispiel näher erläutert.

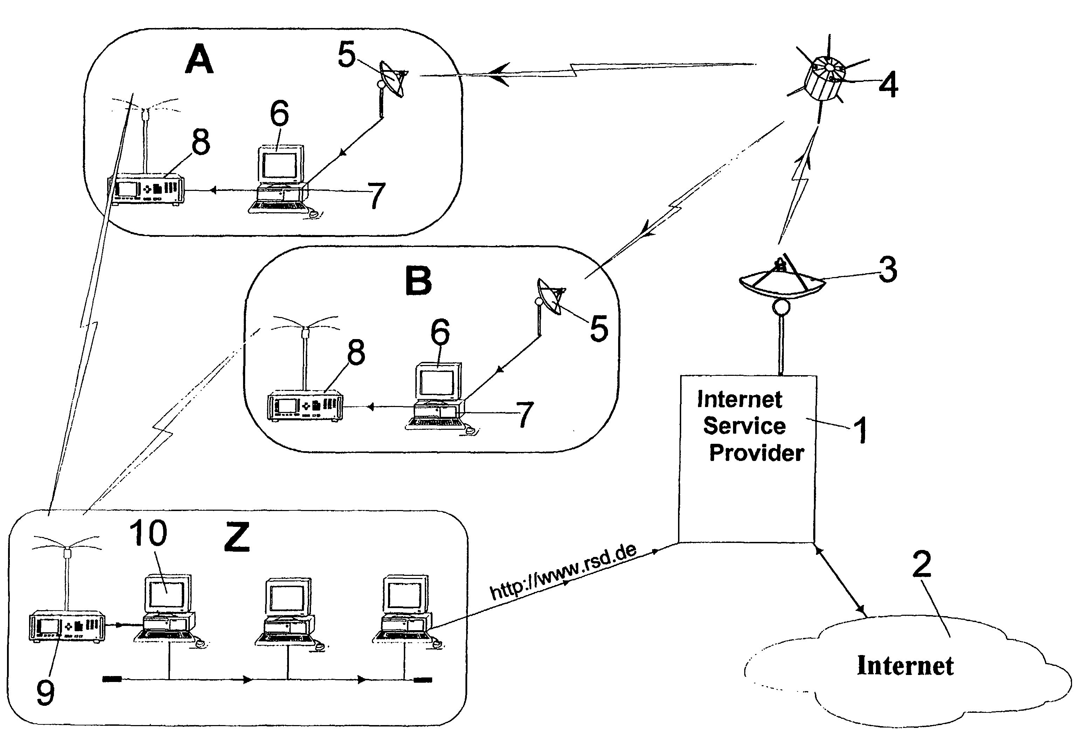

Die Figur zeigt einen Internet-Anbieter 1, der Inhalte aus dem Internet 2 über eine Satellitenübertragungsstrecke 3, 4, 5 zu verschiedenen Benutzern, A und B mit großer Übertragungsrate ermöglicht. Im Rechner 6 jedes Benutzers ist ein entsprechender Decoder 7 vorgesehen. Die Datenübertragung über die Satellitenübertragungsstrecke erfolgt nach dem TCP/IP-Protokoll.

In jeder Benutzerstation A bzw. B ist ein Kurzwellen-Sender/Empfänger 8 vorgesehen, der mit einer Kurzwellen-Sende-Empfangsstation 9 einer Basisstation Z mit Internet-Zugang verbunden ist. Als Kurzwellengeräte 8 und 9 eignen sich beispielsweise die Geräte XK2000 von Rohde & Schwarz, wie sie beispielsweise beschrieben sind im Datenblatt "HF-Transceiver Family XK2000. Die Rechner 6 und 10, welche die Geräte 8 bzw. 9 steuern, liefern ein Steuerprogramm, das dem TCP/IP-Protokoll entspricht und nur auf die speziellen Erfordernisse einer Kurzwellenverbindung angepaßt ist. Die Kurzwellenverbindung zwischen den Geräten 8 und 9 arbeitet also genauso wie die Satellitenübertragungsstrecke nach dem TCP/IP-Protokoll und ist somit unmittelbar geeignet für einen Zugriff der Stationen A und B über Z auf das Internet 2.

Anstelle der Übertragung großer Datenmengen über die Basisstation Z via Kurzwelle an die Benutzerstation A und/oder B können diese Informationen in einer sogenannten Mailbox im Internet für die Benutzer hinterlegt werden. Die Benutzerstationen A und/oder B können sich diese Informationen über die schnelle Satellitenverbindung auf ihre Rechner laden. Sowohl die Benachrichtigung der Benutzerstationen A und/oder B über die hinterlegte Nachricht als auch deren Abfrage der hinterlegten Informationen im Internet erfolgt über das Kurzwellenmedium.

## Patentansprüche

1. System zum Übertragen von Internet-Informationen zu Rechnern (6) abfragender Benutzer (A, B) über einen breitbandigen Satellitenübertragungskanal (3, 4, 5),
**dadurch gekennzeichnet,**
**daß** zur Informationsabfrage die Benutzer (A, B) über eine nach dem TCP/IP-Protokoll Daten übertragende Kurzwellen-Funkstrecke (8, 9) mit einer mit dem Internet (2) verbundenen Basisstation (Z) verbunden sind,
**daß** die abgefragten Informationen für die Benutzer (A, B) in einer Mailbox im Internet (2) hinterlegt werden,
**daß** die Benutzer (A, B) über die hinterlegten Informationen über die Kurzwellen-Funkstrecke (8, 9) benachrichtigt werden, und
**daß** sich die Benutzer (A, B) die hinterlegten Informationen über den breitbandigen Satellitenübertragungskanal (3, 4, 5) auf ihre Rechner (6) laden können.

## Claims

1. System for the transmission of items of Internet information to computers (6) of retrieving users (A, B) via a broadband satellite transmission channel (3, 4, 5),
**characterized**
**in that**, to retrieve information, the users (A, B) are connected to a base station (Z) connected to the Internet (2) via a short-wave radio link (8, 9) transmitting data according to the TCP/IP protocol,
**in that** the retrieved items of the information are stored in a mailbox in the Internet (2) for the users (A, B),
**in that** the users (A, B) are informed of the stored items of information via the short-wave radio link (8, 9), and
**in that** the users (A, B) can load the stored items of information into their computers (6) via the broadband satellite transmission channel (3, 4, 5).

## Revendications

1. Système pour transmettre d'informations du réseau Internet à des ordinateurs (6) d'utilisateurs (A,B) présentant des demandes, par l'intermédiaire d'un canal à large bande (3,4,5) de transmission par satellite, **caractérisé en ce**
**que** pour la demande d'informations, les utilisateurs (A,B) sont reliés à un poste de base (Z) relié au réseau Internet (2), par l'intermédiaire d'une section radio à ondes courtes (8,9) transmettant des données selon le protocole TCP/IP,
**que** les informations demandées sont mémorisées, pour les utilisateurs (A,B), dans une boîte aux lettres dans le réseau Internet (2),
**que** les utilisateurs (A,B) sont avertis concernant les informations mémorisées, par l'intermédiaire de la section radio à ondes courtes (8,9), et
**que** les utilisateurs (A,B) peuvent charger les informations mémorisées, dans leurs ordinateurs (6), par l'intermédiaire du canal de transmission par satellite (3,4,5) à large bande.
